(19) Europäisches Patentamt
European Patent Office
Office européen des brevets

(11) EP 2 790 091 A2

# (12) EUROPEAN PATENT APPLICATION

(43) Date of publication:
**15.10.2014 Bulletin 2014/42**

(51) Int Cl.:
***G06F 3/041*** *(2006.01)*

(21) Application number: **14157504.3**

(22) Date of filing: **03.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.04.2013 JP 2013084171**

(71) Applicant: **FUJITSU LIMITED**
**Kawasaki-shi,**
**Kanagawa 211-8588 (JP)**

(72) Inventors:
- **Kashiwagi, Susumu**
  **Kawasaki-shi, Kanagawa 211-8588 (JP)**
- **Koike, Hideyuki**
  **Kawasaki-shi, Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

## (54) Input device, computer-readable recording medium, and method for receiving input

(57) An input device outputs coordinate information of an input position detected by a touch panel to an upper-level device as it is, without change, as long as the value of pressure on the input position is smaller than a second pressure threshold. The input device stores coordinate information of the input position detected while the value of pressure on the input position is between a first pressure threshold and the second pressure threshold in the memory, and outputs the coordinate information stored in the memory, instead of the coordinate information detected by the touch panel to an upper-level device if the value of pressure on the input position reaches or exceeds the second pressure threshold.

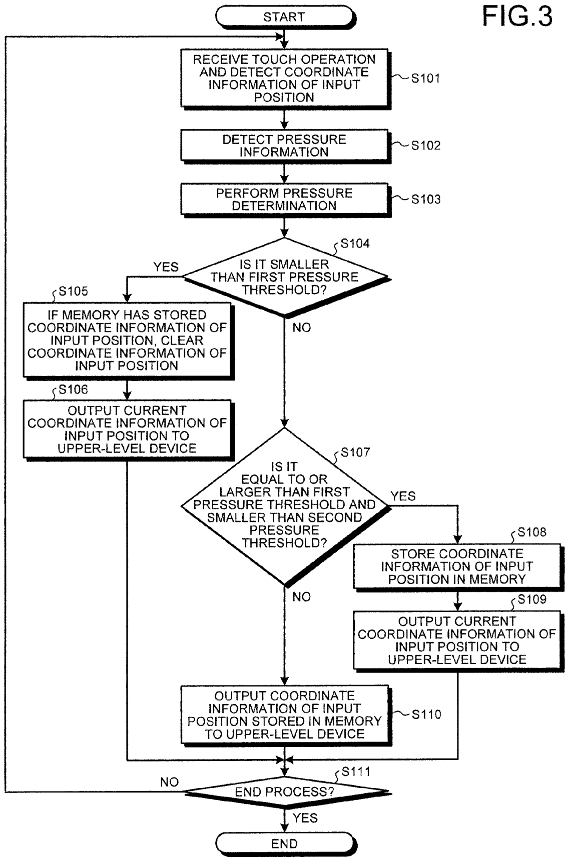


FIG.3

EP 2 790 091 A2

## Description

FIELD

The embodiments discussed herein are related to an input device and the like.

BACKGROUND

In conventional operations on portable terminals, pressing a touch panel with a pressure detecting function has an issue in that users don't press the point as aimed. This is caused by a gap between coordinates of a position on the touch panel when lightly touched and coordinates of a position on the touch panel when pressed on. Hereinafter, a lightly touching operation by a user is referred to as a low pressure operation and a pressing operation by a user is referred to as a high pressure operation.

FIGS. 17 and 18 are diagrams for explaining coordinate deviation in touch panels generated with the conventional technologies. For example, as illustrated in FIG. 17, if the low pressure operation is performed, the portable terminal detects a position 10a as an input position. By contrast, if the high pressure operation is performed, the portable terminal detects a position 10b as an input position. Specifically, the high pressure operation makes the finger pad of the user flat, leading to detection of an input position different from an input position detected compared with when the low pressure operation is performed. This generates a coordinate deviation 10c, for example, as illustrated in FIG. 18, and although the user intends to select an area 10d, an area 10e is selected due to the high pressure operation.

To solve the above-described issue, a conventional technology in Japanese Laid-open Patent Publication No. 2004-110388 has been developed as follows: the low pressure operation is distinguished from the high pressure operation according to the operation pressure on the touch panel; a gap between the coordinates of a position when the low pressure operation is performed and the coordinates of a position when the high pressure operation is performed has been learned, which is used for correcting the coordinates of a position when the high pressure operation is performed subsequently.

Another conventional technology in Japanese Laid-open Patent Publication No. 2008-276276 has been developed, in which coordinates of an input position is sampled several times when a touch operation is performed, and the results of the sampling are averaged, for example, to determine the coordinates of the input position.

With the above-described conventional technologies, however, erroneous input may not be prevented.

For example, with the conventional technology in Japanese Laid-open Patent Publication No. 2004-110388, although the gap between the coordinates of the position when the low pressure operation is performed and the coordinates of a position when the high pressure operation is performed has been learned, the amount of correction for the coordinates of a position when the high pressure operation varies depending on the position on the touch panel or the shape of the touched area, and the change of the pressure of operations, which disables the portable terminal to prevent erroneous operations caused by touching input.

With the conventional technology in Japanese Laid-open Patent Publication No. 2008-276276, the structure of the resistive film touch panel naturally generates a gap in the coordinates obtained by averaging the results of the sampling because the coordinates of the input position is changed little by little when the low pressure operation is performed. This is caused by the nature of the resistive film touch panel in that moderate change of resistance value leads to moderate change of voltage that is a source of the coordinate value, resulting in generation of a gap of the coordinates of the input position.

Accordingly, it is desirable to provide an input device, a computer program for receiving input, and a method for receiving input that are capable of preventing erroneous input.

SUMMARY

According to an aspect of an embodiment, a input device includes a coordinate detecting unit that detects coordinates of an input position on a touch panel; a pressure detecting unit that detects pressure at the input position; and a correction unit that outputs coordinates of the input position detected by the coordinate detecting unit as long as the value of the pressure is smaller than a threshold, and outputs corrected coordinates of the input position detected by the coordinate detecting unit as long as the value of the pressure is equal to or larger than the threshold.

BRIEF DESCRIPTION OF DRAWINGS

FIG. 1 is a diagram illustrating a configuration of an input device according to a first embodiment of the present invention;

FIG. 2 is a functional block diagram illustrating a configuration of a central processing unit (CPU) according to the first embodiment;

FIG. 3 is a flowchart illustrating a processing procedure of the input device according to the first embodiment;

FIG. 4 is a diagram illustrating a configuration of an input device according to a second embodiment of the present invention;

FIG. 5 is a functional block diagram illustrating a configuration of a CPU according to the second embodiment;

FIG. 6 is a flowchart illustrating a processing procedure of the input device according to the second embodiment;

FIG. 7 is a diagram illustrating a configuration of an input device according to a third embodiment of the present invention;

FIG. 8 is a functional block diagram illustrating a configuration of a CPU according to the third embodiment;

FIG. 9 is a flowchart illustrating a processing procedure of the input device according to the third embodiment;

FIG. 10 is a diagram illustrating a configuration of an input device according to a fourth embodiment of the present invention;

FIG. 11 is a diagram illustrating an example of a data structure of a coordinate correction table Tx according to the fourth embodiment;

FIG. 12 is a diagram illustrating an example of a data structure of a coordinate correction table Ty according to the fourth embodiment;

FIG. 13 is a diagram illustrating an example of a data structure of a pressure correction table Px according to the fourth embodiment;

FIG. 14 is a diagram illustrating an example of a data structure of a pressure correction table Py according to the fourth embodiment;

FIG. 15 is a functional block diagram illustrating a configuration of a CPU according to the fourth embodiment;

FIG. 16 is a flowchart illustrating a processing procedure of the input device according to the fourth embodiment;

FIG. 17 is a diagram (1) for explaining coordinate deviation with the conventional technology; and

FIG. 18 is a diagram (2) for explaining the coordinate deviation with the conventional technology.

DESCRIPTION OF EMBODIMENT(S)

Preferred embodiments of the present invention will be explained with reference to accompanying drawings. The embodiments, however, are not intended to limit the scope of the present invention.

[a] First Embodiment

Firstly described is a configuration of an input device according to a first embodiment. FIG. 1 is a diagram illustrating a configuration of an input device according to the first embodiment of the present invention. As illustrated in FIG. 1, this input device 100 includes a liquid crystal display (LCD) 110, a touch panel 120a, a touch control integrated circuit (IC) 120b, a pressure detecting device 130a, and a pressure control IC 130b. The input device 100 also includes a memory 140, an interface 150, and a central processing unit (CPU) 160. The devices and parts 110 to 160 are coupled to each other through a bus 170.

The LCD 110 is a display device in which a liquid crystalline material is used. For example, the LCD 110 receives various types of information that is output from the CPU 160 and various types of information that is output from an upper-level device coupled to the LCD 110 through the interface 150. The LCD 110 then displays the received information thereon.

The touch panel 120a is a touch panel of an electrostatic capacitive system, for example. The touch panel 120a has an electrode film put on its surface. For example, if a user's finger touches the surface of the touch panel 120a, the touch panel 120a detects the change of the electrostatic capacity generated between the tip of the finger and the electrode film to detect the input position by the finger. The touch panel 120a detects coordinate information of the input position for each specified time while the touch operation is performed by the user, for example.

The touch control IC 120b is a device that controls the touch panel 120a. The touch control IC 120b outputs the coordinate information to the CPU 160 every time the touch panel detects the coordinate information of the input position. The touch panel 120a and the touch control IC 120b are examples of a coordinate detecting unit.

The pressure detecting device 130a is a device that detects the pressure on the input position. The pressure detecting device 130a may detect the pressure with any of the conventional technologies. For example, the pressure detecting device 130a converts the degree of deflection of the touch panel 120a caused by the user's operation on the touch panel 120a into the pressure, thereby detecting the pressure on the input position on the touch panel 120a. For example, the pressure detecting device 130a detects the pressure on the input position for each specified time while the touch operation is performed by the user, for example.

The pressure control IC 130b is a device that controls the pressure detecting device 130a. The pressure control IC 130b outputs the pressure information to the CPU 160 every time the pressure detecting device 130a detects the pressure information on the input position. The pressure detecting device 130a and the pressure control IC 130b are examples of a pressure detecting unit.

The memory 140 is a storage device that stores therein various types of information. As will be described later, the memory 140 stores therein the coordinate information of the input position in particular according to a control command of the CPU 160. The memory 140 also deletes the coordinates of the input position stored therein according to the control command of the CPU 160.

The interface 150 is a processing unit that performs data communications with an external device (not illustrated). The LCD 110, the CPU 160, and the like exchange data with an upper-level device through the interface 150.

The CPU 160 is a device that determines the coordinates of the input position on the basis of the coordinate information of the input position acquired from the touch control IC 120b and the pressure information on the input position acquired from the pressure control IC 130b. The CPU 160 then outputs the determined coordinate information of the input position to the upper-level device.

The following describes an example of a functional configuration of the CPU 160. FIG. 2 is a functional block diagram illustrating a configuration of the CPU according to the first embodiment. As illustrated in FIG. 2, the CPU 160 includes a coordinate information acquiring unit 161, a pressure information acquiring unit 162, and a correction unit 163.

The coordinate information acquiring unit 161 acquires the coordinate information of the input position from the touch control IC 120b. The coordinate information acquiring unit 161 outputs the acquired coordinate information of the input position to the correction unit 163 every time upon acquiring the coordinate information of the input position.

The pressure information acquiring unit 162 acquires the pressure information on the input position from the pressure control IC 130b. The pressure information acquiring unit 162 outputs the acquired pressure information on the input position to the correction unit 163 every time upon acquiring the pressure information on the input position.

The correction unit 163 compares the pressure information on the input position to a first pressure threshold and the pressure information on the input position to a second pressure threshold. According to the results of the comparison, the correction unit 163 determines whether the coordinate information of the input position is to be corrected. The first pressure threshold is determined as smaller than the second pressure threshold. If the correction unit 163 determines that the coordinate information is not to be corrected, the correction unit 163 outputs the acquired coordinate information from the coordinate information acquiring unit 161 to the upper-level device. If the correction unit 163 determines that the coordinate information is to be corrected, the correction unit 163 outputs the coordinate information to the upper-level device after correcting the coordinate information.

The following describes three processes: a process executed if the value of the pressure information on the input position is smaller than the first pressure threshold; a process executed if the value of the pressure information on the input position is equal to or larger than the first pressure threshold and smaller than the second pressure threshold; and a process executed if the value of the pressure information on the input position is equal to or larger than the second pressure threshold.

The following describes a process executed if the value of the pressure information on the input position is smaller than the first pressure threshold. As long as the value of the pressure information on the input position is smaller than the first pressure threshold, the correction unit 163 outputs the coordinate information acquired from the coordinate information acquiring unit 161 to the upper-level device as it is, without change. The correction unit 163 also accesses the memory 140 to make the memory 140 delete the coordinate information of the input position if the coordinate information of the input position has been stored in the memory 140.

The following describes a process executed if the value of the pressure information on the input position is equal to or larger than the first pressure threshold and smaller than the second pressure threshold. As long as the value of the pressure information on the input position is equal to or larger than the first pressure threshold and smaller than the second pressure threshold, the correction unit 163 outputs the coordinate information acquired from the coordinate information acquiring unit 161 to the upper-level device as it is, without change. The correction unit 163 also accesses the memory 140 to make the memory 140 store therein the coordinate information of the input position acquired from the coordinate information acquiring unit 161 if it has not been stored in the memory 140.

That is, the correction unit 163 makes the memory 140 store therein the coordinate information firstly acquired after the value of the pressure information on the input position exceeds the first pressure threshold. As already described above, the coordinate information stored in the memory 140 is deleted therefrom at the time when the value of the pressure information on the input position falls below the first pressure threshold.

The following describes a process executed if the value of the pressure information on the input position is equal to or larger than the second pressure threshold. As long as the value of the pressure information on the input position is equal to or larger than the second pressure threshold, the correction unit 163 outputs the coordinate information stored in the memory 140, instead of the coordinate information acquired from the coordinate information acquiring unit 161 to the upper-level device.

The following describes a processing procedure of the input device 100 according to the first embodiment. FIG. 3 is a flowchart illustrating a processing procedure of the input device according to the first embodiment. As illustrated in FIG. 3, the input device 100 receives a touch operation and detects the coordinate information of the input position (Step S101). The input device 100 detects the pressure information on the input position (Step S102) and performs pressure determination (Step S103).

If the value of the pressure on the input position is smaller than the first pressure threshold (Yes at Step S104), in the input device 100, the process sequence proceeds to Step S105. If the memory 140 has stored therein the coordinate information of the input position, the input device 100 clears the coordinate information of the input position (Step S105). The input device 100 outputs the current coordinate information of the input position to the upper-level device (Step S106), and the process sequence proceeds to Step S111.

If the value of the pressure on the input position is equal to or larger than the first pressure threshold (No at Step S104), the input device 100 determines whether the value of the pressure on the input position is equal to or larger than the first pressure threshold and smaller than the second pressure threshold (Step S107). If the value of the pressure on the input position is equal to or larger than the first pressure threshold and smaller than the second pressure threshold (Yes at Step S107), in the input device 100, the process sequence proceeds to Step S108.

The input device 100 stores the coordinate information of the input position in the memory 140 (Step S108). The input device 100 outputs the current coordinate information of the input position to the upper-level device (Step S109), and the process sequence proceeds to Step S111.

If the input device 100 determines that the value of the pressure on the input position is not equal to or larger than the first pressure threshold and smaller than the second pressure threshold (No at Step S107), the input device 100 outputs the coordinate information of the input position stored in the memory 140 to the upper-level device (Step S110).

The input device 100 then determines whether to end the process (Step S111). If the input device 100 determines to continue the process (No at Step S111), in the input device 100, the process sequence proceeds to Step S101. If the input device 100 determines to end the process (Yes at Step S111), the input device 100 ends the process.

The following describes the advantageous effects of the input device 100 according to the first embodiment. As long as the value of the pressure on the input position is smaller than the second pressure threshold, the input device 100 outputs the coordinate information of the input position detected by the touch panel 120a to the upper-level device as it is, without change. The input device 100 stores the coordinate information of the input position detected while the value of the pressure on the input position is between the first pressure threshold and the second pressure threshold in the memory 140. If the value of the pressure reaches or exceeds the second pressure threshold, the input device 100 outputs the coordinate information stored in the memory 140 to the upper-level device, instead of the coordinate information detected by the touch panel 120a. This enables the input device 100 according to the first embodiment to prevent erroneous input in a touch panel operation.

[b] Second embodiment

The following describes a configuration of an input device according to a second embodiment. FIG. 4 is a diagram illustrating a configuration of an input device according to the second embodiment of the present invention. As illustrated in FIG. 4, this input device 200 includes the LCD 110, the touch panel 120a, the touch control IC 120b, the pressure detecting device 130a, the pressure control IC 130b, the memory 140, the interface 150, and a CPU 260. The devices and parts 110 to 150 and 260 are coupled to each other through a bus 170.

Because description of the devices and parts 110 to 150 are the same as the description of the devices and parts 110 to 150 with reference to FIG. 1, the common numerals are assigned and overlapping explanation thereof will be omitted.

The CPU 260 is a device that determines the coordinates of the input position on the basis of the coordinate information of the input position acquired from the touch control IC 120b and the pressure information on the input position acquired from the pressure control IC 130b. The CPU 260 then outputs the determined coordinate information of the input position to the upper-level device.

The following describes an example of a functional configuration of the CPU 260. FIG. 5 is a functional block diagram illustrating a configuration of the CPU according to the second embodiment. As illustrated in FIG. 5, the CPU 260 includes a coordinate information acquiring unit 261, a pressure information acquiring unit 262, and a correction unit 263.

The coordinate information acquiring unit 261 acquires the coordinate information of the input position from the touch control IC 120b. The coordinate information acquiring unit 261 outputs the acquired coordinate information of the input position to the correction unit 263 every time upon acquiring the coordinate information of the input position.

The pressure information acquiring unit 262 acquires the pressure information on the input position from the pressure control IC 130b. The pressure information acquiring unit 262 outputs the acquired pressure information on the input position to the correction unit 263 every time upon acquiring the pressure information on the input position.

The correction unit 263 compares the pressure information on the input position to a predetermined pressure threshold. According to the result of the comparison, the correction unit 263 determines whether the coordinate information of the input position is to be corrected. If the correction unit 263 determines that the coordinate information is not to be corrected, the correction unit 263 outputs the acquired coordinate information from the coordinate information acquiring unit 261 to the upper-level device. If the correction unit 263 determines that the coordinate information is to be corrected, the correction unit 263 outputs the coordinate information to the upper-level device after correcting the coordinate information.

The following describes two processes: a process executed if the value of the pressure information on the input position is smaller than the predetermined threshold; and a process executed if the value of the pressure information on the input position is equal to or larger than the predetermined threshold.

Firstly described is a process executed if the value of the pressure information on the input position is smaller than the predetermined threshold. As long as the value of the pressure information on the input position is smaller than the predetermined threshold, the correction unit 263 outputs the coordinate information acquired from the coordinate information acquiring unit 261 to the upper-level device as it is, without change. The correction unit 263 also accesses the memory 140 to make the memory 140 delete the coordinate information of the input position if the coordinate information of the input position has been stored in the memory 140.

Subsequently described is a process executed if the value of the pressure information on the input position is equal to or larger than the predetermined threshold. The correction unit 263 accesses the memory 140 to determine whether the coordinate information of the input position is stored in the memory 140. If the coordinate information of the input position is stored in the memory 140, the correction unit 263 outputs the coordinate information stored in the memory 140, instead of the coordinate information acquired from the coordinate information acquiring unit 261, to the upper-level device.

If the coordinate information of the input position is not stored in the memory 140, the correction unit 263 makes the memory 140 store therein the coordinate information of the input position acquired from the coordinate information acquiring unit 261 and outputs the same coordinate information as that stored in the memory 140 to the upper-level device.

That is, the correction unit 263 makes the memory 140 store therein the coordinate information firstly acquired after the value of the pressure information on the input position exceeds the predetermined threshold. As long as the value of the pressure information on the input position is equal to or larger than the predetermined threshold, the correction unit 263 outputs the coordinate information stored in the memory 140 to the upper-level device, as information detected by the touch panel 120a.

The following describes a processing procedure of the input device 200 according to the second embodiment. FIG. 6 is a flowchart illustrating a processing procedure of the input device according to the second embodiment. As illustrated in FIG. 6, the input device 200 receives a touch operation and detects the coordinate information of the input position (Step S201). The input device 200 detects the pressure information on the input position (Step S202) and performs pressure determination (Step S203).

If the value of the pressure on the input position is smaller than the predetermined threshold (Yes at Step S204), in the input device 200, the process sequence proceeds to Step S205. If the memory 140 has stored therein the coordinate information of the input position, the input device 200 clears the coordinate information of the input position (Step S205). The input device 200 outputs the current coordinate information of the input position to the upper-level device (Step S206), and the process sequence proceeds to Step S209.

If the value of the pressure on the input position is equal to or larger than the predetermined threshold (No at Step S204), in the input device 200, the process sequence proceeds to Step S207. If the memory 140 has not stored the coordinate information of the input position, the input device 200 stores the current coordinate information of the input position in the memory 140 (Step S207). The input device 200 outputs the coordinate information of the input position stored in the memory 140 to the upper-level device (Step S208).

The input device 200 then determines whether to end the process (Step S209). If the input device 200 determines to continue the process (No at Step S209), in the input device 200, the process sequence proceeds to Step S201. If the input device 200 determines to end the process (Yes at Step S209), the input device 200 ends the process.

The following describes the advantageous effects of the input device 200 according to the second embodiment. As long as the value of the pressure on the input position is smaller than the predetermined threshold, the input device 200 outputs the coordinate information of the input position detected by the touch panel 120a to the upper-level device as it is, without change. The input device 200 also makes the memory 140 store therein the coordinate information of the input position firstly acquired after the value of the pressure information on the input position exceeds the predetermined threshold. As long as the value of the pressure information on the input position is equal to or larger than the predetermined threshold, the input device 200 outputs the coordinate information stored in the memory 140 to the upper-level device, as information detected by the touch panel 120a. This enables the input device 200 according to the second embodiment to prevent erroneous input in a touch panel operation. The input device 200 according to the second embodiment is also capable of preventing the coordinate information from significantly changing at the moment when the value of the pressure information on the input position reaches or exceeds the predetermined threshold.

[c] Third Embodiment

The following describes a configuration of an input device according to a third embodiment. FIG. 7 is a diagram illustrating a configuration of an input device according to the third embodiment of the present invention. As illustrated in FIG. 7, this input device 300 includes the LCD 110, the touch panel 120a, the touch control IC 120b, the pressure detecting device 130a, the pressure control IC 130b, the memory 140, the interface 150, and a CPU 360. The devices and parts 110 to 150 and 360 are coupled to each other through a bus 170.
Because description of the devices and parts 110 to 150 are the same as the description of the devices and parts 110 to 150 with reference to FIG. 1, the common numerals are assigned and overlapping explanation thereof will be omitted.
The CPU 360 is a device that calculates the coordinates of the input position on the basis of the coordinate information of the input position acquired from the touch control IC 120b and the pressure information on the input position acquired from the pressure control IC 130b. The CPU 360 then outputs the calculated coordinate information of the input position to the upper-level device.
The following describes an example of a functional configuration of the CPU 360. FIG. 8 is a functional block diagram illustrating a configuration of the CPU according to the third embodiment. As illustrated in FIG. 8, the CPU 360 includes a coordinate information acquiring unit 361, a pressure information acquiring unit 362, and a correction unit 363.
The coordinate information acquiring unit 361 acquires the coordinate information of the input position from the touch control IC 120b. The coordinate information acquiring unit 361 outputs the acquired coordinate information of the input position to the correction unit 363 every time upon acquiring the coordinate information of the input position.
The pressure information acquiring unit 362 acquires the pressure information on the input position from the pressure control IC 130b. The pressure information acquiring unit 362 outputs the acquired pressure information on the input position to the correction unit 363 every time upon acquiring the pressure information on the input position.
The correction unit 363 corrects the coordinate information of the input position on the basis of the pressure information and outputs the corrected coordinate information to the upper-level device. For example, the correction unit 363 calculates the corrected coordinate information on the basis of the following Expression (1a) and Expression (1b).

$$X = Xcur + Coefx \times Pcur + Offsetx \ldots (1a)$$

$$Y = Ycur + Coefy \times Pcur + Offsety \ldots (1b)$$

As for Expressions (1a) and (1b), the coordinates (X, Y) represent the corrected coordinate information; and the coordinates (Xcur, Ycur) represent the current coordinate information of the input position acquired from the coordinate information acquiring unit 361. "Pcur" represents the current pressure information acquired from the pressure information acquiring unit 362. An inclination (Coefx, Coefy) and an intercept (Offsetx, Offsety) are both a correction coefficient, the values of which are set by the administrator appropriately.
The correction unit 363 calculates the corrected coordinate information (X, Y) on the basis of Expression (1a) and Expression (1b) and outputs the calculated corrected coordinate information (X, Y) to the upper-level device.
If the pressure information acquired from the pressure information acquiring unit 362 reaches or exceeds the predetermined pressure threshold, the correction unit 363 may calculate the corrected coordinate information (X, Y) on the basis of Expression (1a) and Expression (1b). That is, as long as the pressure information acquired from the pressure information acquiring unit 362 is smaller than the predetermined pressure threshold, the correction unit 363 may output the current coordinate information (Xcur, Ycur) to the upper-level device as it is, without change.
The following describes a processing procedure of the input device 300 according to the third embodiment. FIG. 9 is a flowchart illustrating a processing procedure of the input device according to the third embodiment. As illustrated in FIG. 9, the input device 300 receives a touch operation and detects the coordinate information of the input position (Step S301). The input device 300 detects the pressure information on the input position (Step S302).
The input device 300 corrects the coordinate information of the input position (Step S303). For example, at Step S303, the input device 300 calculates the corrected coordinate information (X, Y) on the basis of Expressions (1a) and (1b) described above. The input device 300 outputs the corrected coordinate information to the upper-level device (Step S304).

The input device 300 then determines whether to end the process (Step S305). If the input device 300 determines to continue the process (No at Step S305), in the input device 300, the process sequence proceeds to Step S301. If the input device 300 determines to end the process (Yes at Step S305), the input device 300 ends the process.

The following describes the advantageous effects of the input device 300 according to the third embodiment. The input device 300 corrects the coordinate information of the input position on the basis of the pressure information and outputs the corrected coordinate information to the upper-level device. This enables the input device 300 to prevent erroneous input if the user performs a high pressure operation.

The expression used for calculating the corrected coordinate information by the correction unit 363 is not limited to Expressions (1a) and (1b) described above. For example, the correction unit 363 may use the following Expressions (2a) and (2b) or Expressions (3a) and (3b) to calculate the corrected coordinate information (X, Y).

$$X = Xcur + (Coefx_x \times Xcur + Coefx_y \times Ycur + Offsetx) \quad ... \quad (2a)$$

$$Y = Ycur + (Coefy_x \times Xcur + Coefy_y \times Ycur + Offsety) \quad ... \quad (2b)$$

As for Expressions (2a) and (2b), the coordinates (X, Y) represent the corrected coordinate information; and the coordinates (Xcur, Ycur) represent the current coordinate information of the input position acquired from the coordinate information acquiring unit 361. A first inclination (Coefx_x, Coefx_y), a second inclination (Coefy_x, Coefy_y) and an intercept (Offsetx, Offsety) are all correction coefficients, the values of which are set by the administrator appropriately. If the correction unit 363 corrects the coordinate information by using Expression (2a) and Expression (2b) and as long as the pressure information acquired from the pressure information acquiring unit 362 is smaller than the predetermined pressure threshold, the correction unit 363 may output the current coordinate information (Xcur, Ycur) to the upper-level device as it is, without change.

$$X = Xcur + Coefx_p \times Pcur \times (Coefx_x \times Xcur + Coefx_y \times Ycur + Offsetx) + Offsetx_p \quad ... \quad (3a)$$

$$Y = Ycur + Coefy_p \times Pcur \times (Coefy_x \times Xcur + Coefy_y \times Ycur + Offsety) + Offsety_p \quad ... \quad (3b)$$

As for Expressions (3a) and (3b), the coordinates (X, Y) represent the corrected coordinate information; and the coordinates (Xcur, Ycur) represent the current coordinate information of the input position acquired from the coordinate information acquiring unit 361. "Pcur" represents the current pressure information acquired from the pressure information acquiring unit 362. A first inclination (Coefx_x, Coefx_y), a second inclination (Coefy_x, Coefy_y), a third inclination (Coefy_p, Coefy_p), a first intercept (Offsetx, Offsety), and a second intercept (Offsetx_p, Offsety_p) are all correction coefficients, the values of which are set by the administrator appropriately. If the correction unit 363 corrects the coordinate information by using Expression (3a) and Expression (3b) and as long as the pressure information acquired from the pressure information acquiring unit 362 is smaller than the predetermined pressure threshold, the correction unit 363 may output the current coordinate information (Xcur, Ycur) to the upper-level device as it is, without change.

[d] Fourth embodiment

The following describes a configuration of an input device according to a fourth embodiment. FIG. 10 is a diagram illustrating a configuration of an input device according to the fourth embodiment of the present invention. As illustrated in FIG. 10, this input device 400 includes the LCD 110, the touch panel 120a, the touch control IC 120b, the pressure detecting device 130a, the pressure control IC 130b, a memory 440, the interface 150, and a CPU 460. The devices and parts 110 to 150, 440, and 460 are coupled to each other through a bus 170.

Because description of the devices and parts 110 to 150 are the same as the description of the devices and parts 110 to 150 with reference to FIG. 1, the common numerals are assigned and overlapping explanation thereof will be omitted.

The memory 440 is a storage device that stores therein various types of information. For example, the memory 440 stores therein the coordinate information of the input position in the same manner as the memory 140 illustrated in FIG. 1. The memory 440 also deletes the coordinates of the input position stored therein according to the control command of the CPU 460.

In addition, the memory 440 stores therein a coordinate correction table Tx, a coordinate correction table Ty, a pressure correction table Px, and a pressure correction table Py.

The coordinate correction table Tx is a table that determines a correction coefficient corresponding to the coordinate information of the input position. FIG. 11 is a diagram illustrating an example of a data structure of the coordinate correction table Tx. As illustrated in FIG. 11, the coordinate correction table Tx is used for determining a correction coefficient corresponding to the coordinate information of the input position. For example, if the coordinate information represents (Xcur = 0, Ycur = 1), the correction coefficient is determined as "0" with the coordinate correction table Tx.

The coordinate correction table Ty is a table that determines a correction coefficient corresponding to the coordinate information of the input position. FIG. 12 is a diagram illustrating an example of a data structure of the coordinate correction table Ty. As illustrated in FIG. 12, the coordinate correction table Ty is used for determining a correction coefficient corresponding to the coordinate information of the input position. For example, if the coordinate information represents (Xcur = 0, Ycur = 1), the correction coefficient is determined as "- 10" with the coordinate correction table Ty.

The pressure correction table Px is a table that determines a correction coefficient corresponding to the pressure information on the input position. FIG. 13 is a diagram illustrating an example of a data structure of the pressure correction table Px. As illustrated in FIG. 13, the pressure correction table Px is used for determining a correction coefficient corresponding to the pressure information on the input position. For example, if the pressure information represents (Pcur = 2), the correction coefficient is determined as "0.1" with the pressure correction table Px.

The pressure correction table Py is a table that determines a correction coefficient corresponding to the pressure information on the input position. FIG. 14 is a diagram illustrating an example of a data structure of the pressure correction table Py. As illustrated in FIG. 14, the pressure correction table Py is used for determining a correction coefficient corresponding to the pressure information on the input position. For example, if the pressure information represents (Pcur = 2), the correction coefficient is determined as "0.1" with the pressure correction table Py.

The CPU 460 is a device that calculates the coordinates of the input position on the basis of the coordinate information of the input position acquired from the touch control IC 120b, the pressure information on the input position acquired from the pressure control IC 130b, and the tables stored in the memory 440. The CPU 460 then outputs the calculated coordinate information of the input position to the upper-level device.

The following describes an example of a functional configuration of the CPU 460. FIG. 15 is a functional block diagram illustrating a configuration of the CPU according to the fourth embodiment. As illustrated in FIG. 15, the CPU 460 includes a coordinate information acquiring unit 461, a pressure information acquiring unit 462, and a correction unit 463.

The coordinate information acquiring unit 461 acquires the coordinate information of the input position from the touch control IC 120b. The coordinate information acquiring unit 461 outputs the acquired coordinate information of the input position to the correction unit 463 every time upon acquiring the coordinate information of the input position.

The pressure information acquiring unit 462 acquires the pressure information on the input position from the pressure control IC 130b. The pressure information acquiring unit 462 outputs the acquired pressure information on the input position to the correction unit 463 every time upon acquiring the pressure information on the input position.

The correction unit 463 corrects the coordinate information of the input position on the basis of the coordinate information of the input position, the pressure information on the input position, and the tables stored in the memory 440. The correction unit 463 then outputs the corrected coordinate information to the upper-level device. For example, the correction unit 463 calculates the corrected coordinate information on the basis of the following Expression (4a) and Expression (4b).

$$X = Xcur + Px\ (Pcur') \times Tx\ (Xcur', Ycur') \quad ...\ (4a)$$

$$Y = Ycur + Py\ (Pcur') \times Ty\ (Xcur', Ycur') \quad ...\ (4b)$$

As for Expressions (4a) and (4b), the coordinates (X, Y) represent the corrected coordinate information; and the coordinates (Xcur, Ycur) represent the current coordinate information of the input position acquired from the coordinate information acquiring unit 461. "Pcur'" represents the current pressure information acquired from the pressure information acquiring unit 462.

Tx (Xcur', Ycur') corresponds to the correction coefficient determined by the coordinate correction table Tx. (Xcur', Ycur') corresponds to the value obtained by quantizing the coordinate information (Xcur, Ycur) with a certain width. The correction unit 463 compares the coordinate correction table Tx to (Xcur', Ycur') to obtain the value of Tx (Xcur', Ycur').

Ty (Xcur', Ycur') corresponds to the correction coefficient determined by the coordinate correction table Ty. (Xcur', Ycur') corresponds to the value obtained by quantizing the coordinate information (Xcur, Ycur) with a certain width. The correction unit 463 compares the coordinate correction table Ty to (Xcur', Ycur') to obtain the value of Ty (Xcur', Ycur').

Px (Pcur') corresponds to the correction coefficient determined by the pressure correction table Px. (Pcur') corresponds to the value obtained by quantizing the pressure information (Pcur) with a certain width. The correction unit 463 compares the pressure correction table Px to (Pcur') to obtain the value of Px (Pcur').

Py (Pcur') corresponds to the correction coefficient determined by the pressure correction table Py. (Pcur') corresponds to the value obtained by quantizing the pressure information (Pcur) with a certain width. The correction unit 463 compares the pressure correction table Py to (Pcur') to obtain the value of Py (Pcur').

The correction unit 463 calculates the corrected coordinate information (X, Y) on the basis of Expression (4a) and Expression (4b) and outputs the calculated corrected coordinate information (X, Y) to the upper-level device.

If the pressure information acquired from the pressure information acquiring unit 462 reaches or exceeds the predetermined pressure threshold, the correction unit 463 may calculate the corrected coordinate information (X, Y) on the basis of Expression (4a) and Expression (4b). That is, as long as the pressure information acquired from the pressure information acquiring unit 462 is smaller than the predetermined pressure threshold, the correction unit 463 may output the current coordinate information (Xcur, Ycur) to the upper-level device as it is, without change.

The following describes a processing procedure of the input device 400 according to the fourth embodiment. FIG. 16 is a flowchart illustrating a processing procedure of the input device according to the fourth embodiment. As illustrated in FIG. 16, the input device 400 receives a touch operation and detects the coordinate information of the input position (Step S401). The input device 400 detects the pressure information on the input position (Step S402).

The input device 400 corrects the coordinate information of the input position on the basis of the tables (Step S403). The tables are the coordinate correction table Tx, the coordinate correction table Ty, the pressure correction table Px, and the pressure correction table Py all stored in the memory 440. The input device 400 calculates the corrected coordinate information (X, Y) on the basis of Expressions (4a) and (4b). The input device 400 outputs the corrected coordinate information to the upper-level device (Step S404).

The input device 400 then determines whether to end the process (Step S405). If the input device 400 determines to continue the process (No at Step S405), in the input device 400, the process sequence proceeds to Step S401. If the input device 400 determines to end the process (Yes at Step S405), the input device 400 ends the process.

The following describes the advantageous effects of the input device 400 according to the fourth embodiment. The input device 400 corrects the coordinate information of the input position on the basis of the coordinate information of the input position, the pressure information on the input position, and the tables stored in the memory 440. The input device 400 then outputs the corrected coordinate information to the upper-level device. This enables the input device 400 to prevent erroneous input if the user performs a high pressure operation. The input device 400 is also capable of reducing the calculation cost because the input device 400 uses the tables stored in the memory 440 for correcting the coordinate information of the input position.

In the first to fourth embodiments described above, the touch control IC 120b and the pressure control IC 130b have been described to be individual ICs, for example, however, these ICs may be integrated to be a single IC.

An embodiment according to the present invention can provide the advantageous effect of preventing erroneous input.

## Claims

1. An input device (100,200,300,400) comprising:

    a coordinate detecting unit (120a,120b) that is configured to detect coordinates of an input position on a touch panel;
    a pressure detecting unit (130a,130b) that is configured to detect pressure at the input position; and
    a correction unit (163,253,363,463) that is configured to output coordinates of the input position detected by the coordinate detecting unit as long as the value of the pressure is smaller than a threshold, and output corrected coordinates of the input position detected by the coordinate detecting unit as long as the value of the pressure is equal to or larger than the threshold.

2. The input device (100,200,300,400) according to claim 1, wherein if the value of the pressure reaches or exceeds a first threshold, the correction unit (163) is configured to store coordinates of the input position detected by the coordinate detecting unit (120a,120b) in a storage device, and as long as the value of the pressure is equal to or larger than a second threshold, the correction unit (163) is configured to output the coordinates stored in the storage device.

3. The input device (100,200,300,400) according to claim 1, wherein as long as the value of the pressure is smaller than the threshold, the correction unit (263) is configured to output coordinates of the input position detected by the coordinate detecting unit(120a,120b), and as long as the value of the pressure is equal to or larger than the threshold, the correction unit (263) is configured to output the coordinates of the input position detected by the coordinate detecting unit (120a,120b) firstly after the value of the pressure reaches or exceeds the threshold.

4. The input device (100,200,300,400) according to claim 1, wherein as long as the value of the pressure is smaller than the threshold, the correction unit (363) is configured to output coordinates of the input position detected by the coordinate detecting unit (120a,120b), and if the value of the pressure is equal to or larger than the threshold, the correction unit (363) is configured to correct the coordinates of the input position detected by the coordinate detecting unit(120a,120b) according to the pressure.

5. The input device (100,200,300,400) according to claim 1, wherein as long as the value of the pressure is smaller than the threshold, the correction unit (463) is configured to output coordinates of the input position detected by the coordinate detecting unit (120a,120b), and if the value of the pressure is equal to or larger than the threshold, the correction unit (463) is configured to correct the coordinates of the input position detected by the coordinate detecting unit (120a,120b) according to the coordinates of the input position.

6. A computer-readable recording medium having stored therein a program for receiving input causing a computer to execute a process comprising:

    detecting coordinates of an input position on a touch panel;
    detecting pressure at the input position; and
    first outputting coordinates of the input position as long as the value of the pressure is smaller than a threshold; and second outputting corrected coordinates of the input position as long as the value of the pressure is equal to or larger than the threshold.

7. The computer-readable recording medium according to claim 6, wherein if the value of the pressure reaches or exceeds a first threshold, the second outputting stores coordinates of the input position in a storage device, and as long as the value of the pressure is equal to or larger than a second threshold, the second outputting outputs the coordinates stored in the storage device.

8. The computer-readable recording medium according to claim 6, wherein as long as the value of the pressure is smaller than the threshold, the first outputting outputs coordinates of the input position, and as long as the value of the pressure is equal to or larger than the threshold, the second outputting outputs the coordinates of the input position detected firstly after the value of the pressure reaches or exceeds the threshold.

9. The computer-readable recording medium according to claim 6, wherein as long as the value of the pressure is smaller than the threshold, the first outputting outputs coordinates of the input position, and if the value of the pressure is equal to or larger than the threshold, the second outputting corrects the coordinates of the input position according to the pressure.

**10.** The computer-readable recording medium according to claim 6, wherein as long as the value of the pressure is smaller than the threshold, the first outputting outputs coordinates of the input position, and if the value of the pressure is equal to or larger than the threshold, the second outputting corrects the coordinates of the input position according to the coordinates of the input position.

**11.** A method for receiving input executed by a computer, the method comprising:

detecting coordinates of an input position on a touch panel;
detecting pressure at the input position; and
first outputting coordinates of the input position as long as the value of the pressure is smaller than a threshold; and
second outputting corrected coordinates of the input position as long as the value of the pressure is equal to or larger than the threshold.

**12.** The method for receiving input according to claim 11, wherein if the value of the pressure reaches or exceeds a first threshold, the second outputting stores coordinates of the input position in a storage device, and as long as the value of the pressure is equal to or larger than a second threshold, the second outputting outputs the coordinates stored in the storage device.

**13.** The method for receiving input according to claim 11, wherein as long as the value of the pressure is smaller than the threshold, the first outputting outputs coordinates of the input position, and as long as the value of the pressure is equal to or larger than the threshold, the second outputting outputs the coordinates of the input position detected firstly after the value of the pressure reaches or exceeds the threshold.

**14.** The method for receiving input according to claim 11, wherein as long as the value of the pressure is smaller than the threshold, the first outputting outputs coordinates of the input position, and if the value of the pressure is equal to or larger than the threshold, the second outputting corrects the coordinates of the input position according to the pressure.

**15.** The method for receiving input according to claim 11, wherein as long as the value of the pressure is smaller than the threshold, the first outputting outputs coordinates of the input position, and if the value of the pressure is equal to or larger than the threshold, the second outputting corrects the coordinates of the input position according to the coordinates of the input position.

FIG.1

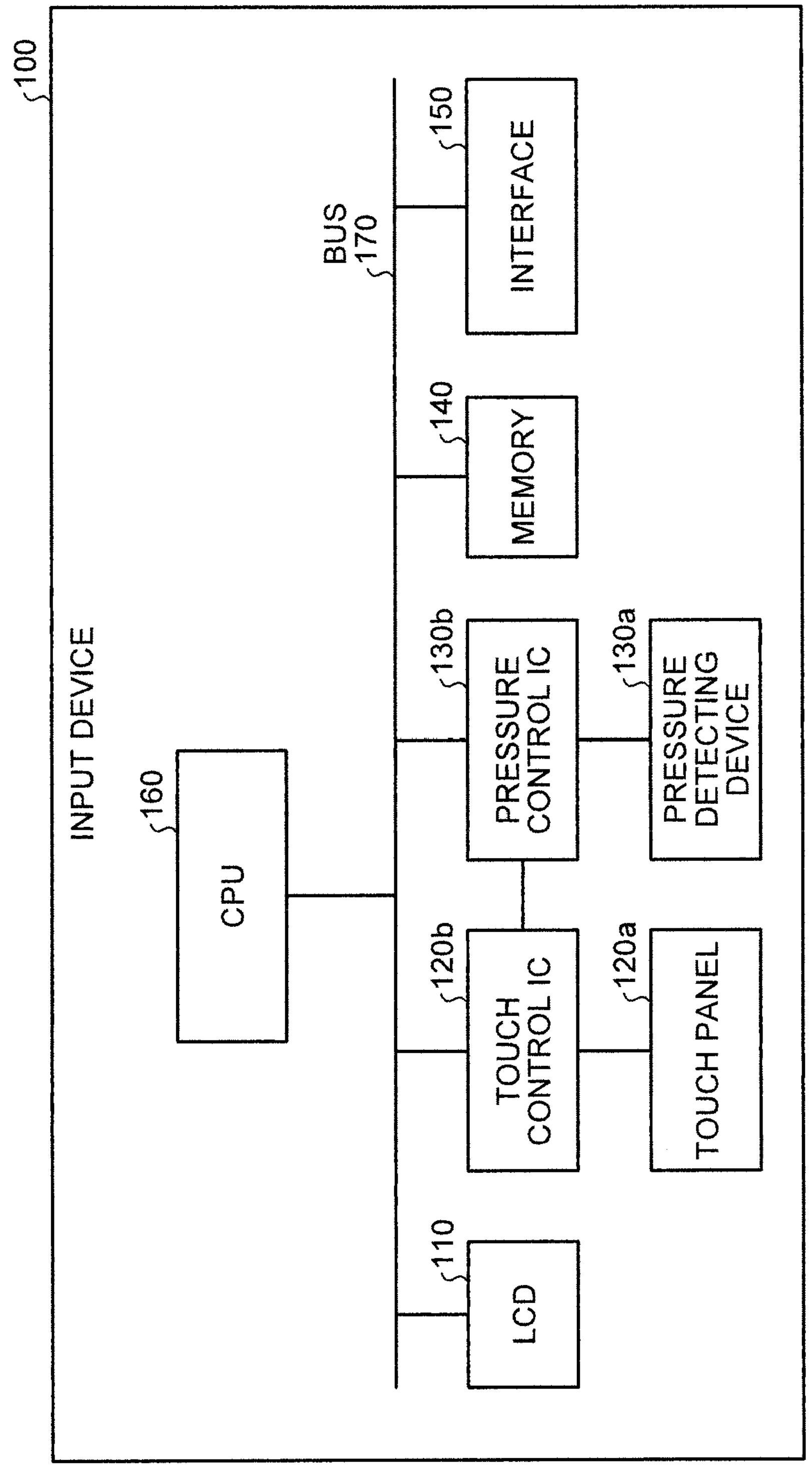
100
INPUT DEVICE
160
CPU
BUS
170
110
LCD
120b
TOUCH CONTROL IC
120a
TOUCH PANEL
130b
PRESSURE CONTROL IC
130a
PRESSURE DETECTING DEVICE
140
MEMORY
150
INTERFACE

FIG.2

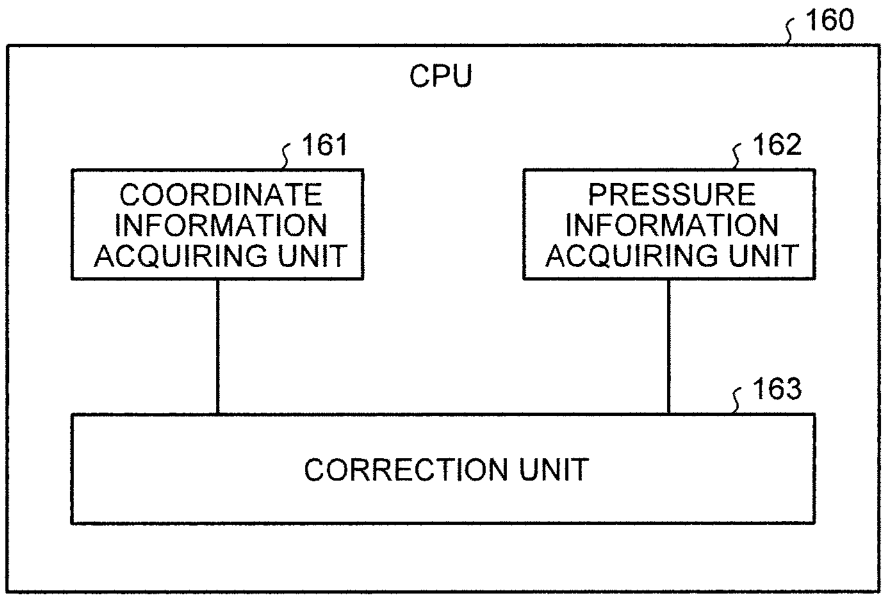
160
CPU
161
COORDINATE INFORMATION ACQUIRING UNIT
162
PRESSURE INFORMATION ACQUIRING UNIT
163
CORRECTION UNIT

FIG.3

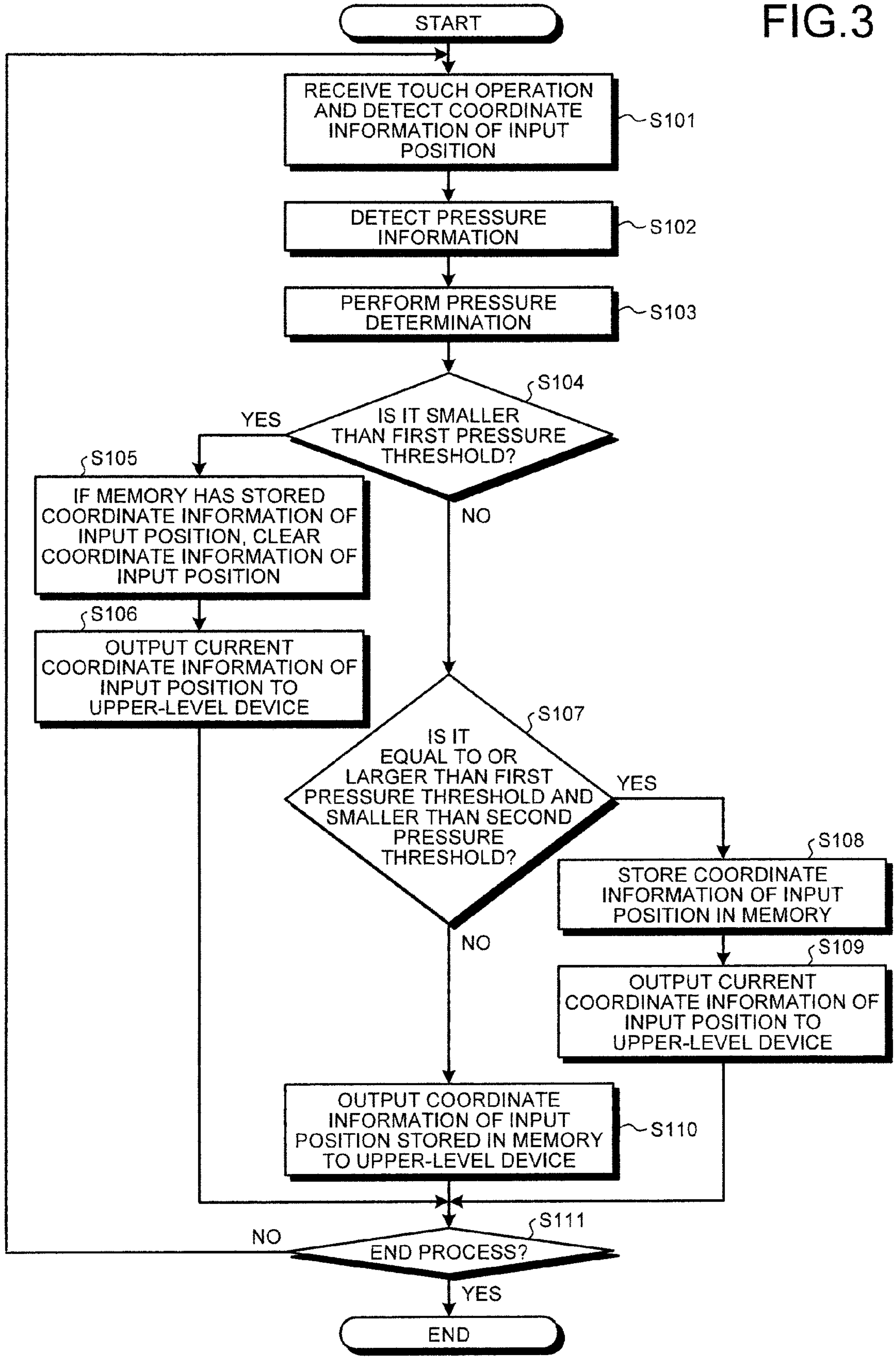
START
RECEIVE TOUCH OPERATION AND DETECT COORDINATE INFORMATION OF INPUT POSITION
S101
DETECT PRESSURE INFORMATION
S102
PERFORM PRESSURE DETERMINATION
S103
IS IT SMALLER THAN FIRST PRESSURE THRESHOLD?
S104
YES
NO
IF MEMORY HAS STORED COORDINATE INFORMATION OF INPUT POSITION, CLEAR COORDINATE INFORMATION OF INPUT POSITION
S105
OUTPUT CURRENT COORDINATE INFORMATION OF INPUT POSITION TO UPPER-LEVEL DEVICE
S106
IS IT EQUAL TO OR LARGER THAN FIRST PRESSURE THRESHOLD AND SMALLER THAN SECOND PRESSURE THRESHOLD?
S107
YES
NO
STORE COORDINATE INFORMATION OF INPUT POSITION IN MEMORY
S108
OUTPUT CURRENT COORDINATE INFORMATION OF INPUT POSITION TO UPPER-LEVEL DEVICE
S109
OUTPUT COORDINATE INFORMATION OF INPUT POSITION STORED IN MEMORY TO UPPER-LEVEL DEVICE
S110
END PROCESS?
S111
NO
YES
END

FIG.4

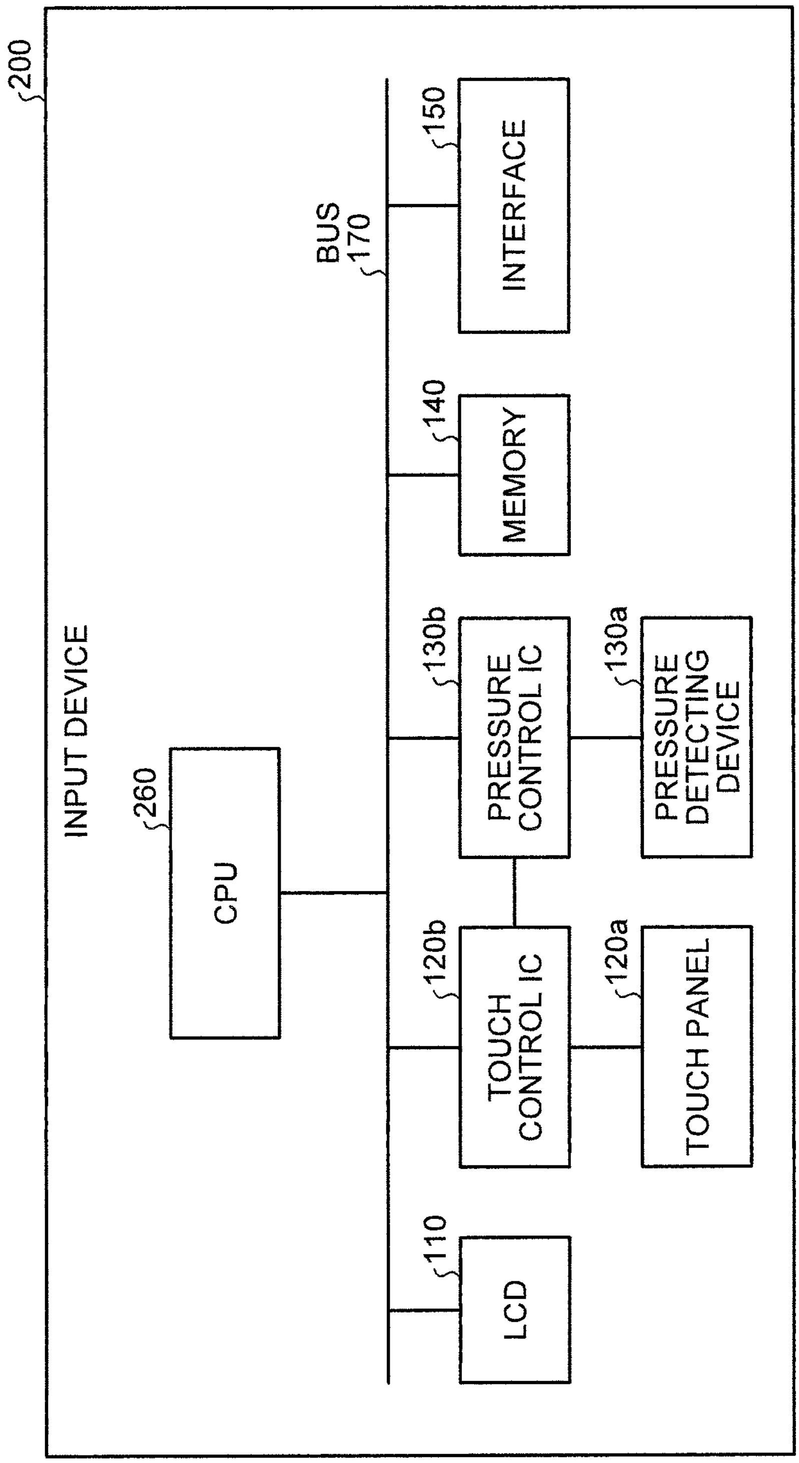
200
INPUT DEVICE
260
CPU
BUS
170
150
INTERFACE
140
MEMORY
130b
PRESSURE CONTROL IC
130a
PRESSURE DETECTING DEVICE
120b
TOUCH CONTROL IC
120a
TOUCH PANEL
110
LCD

FIG.5

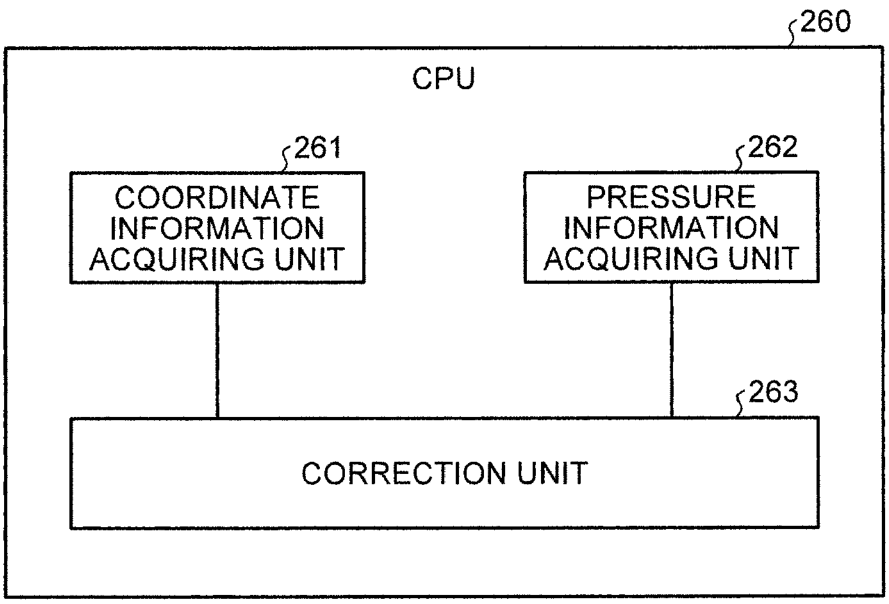
260
CPU
261
COORDINATE INFORMATION ACQUIRING UNIT
262
PRESSURE INFORMATION ACQUIRING UNIT
263
CORRECTION UNIT

FIG.6

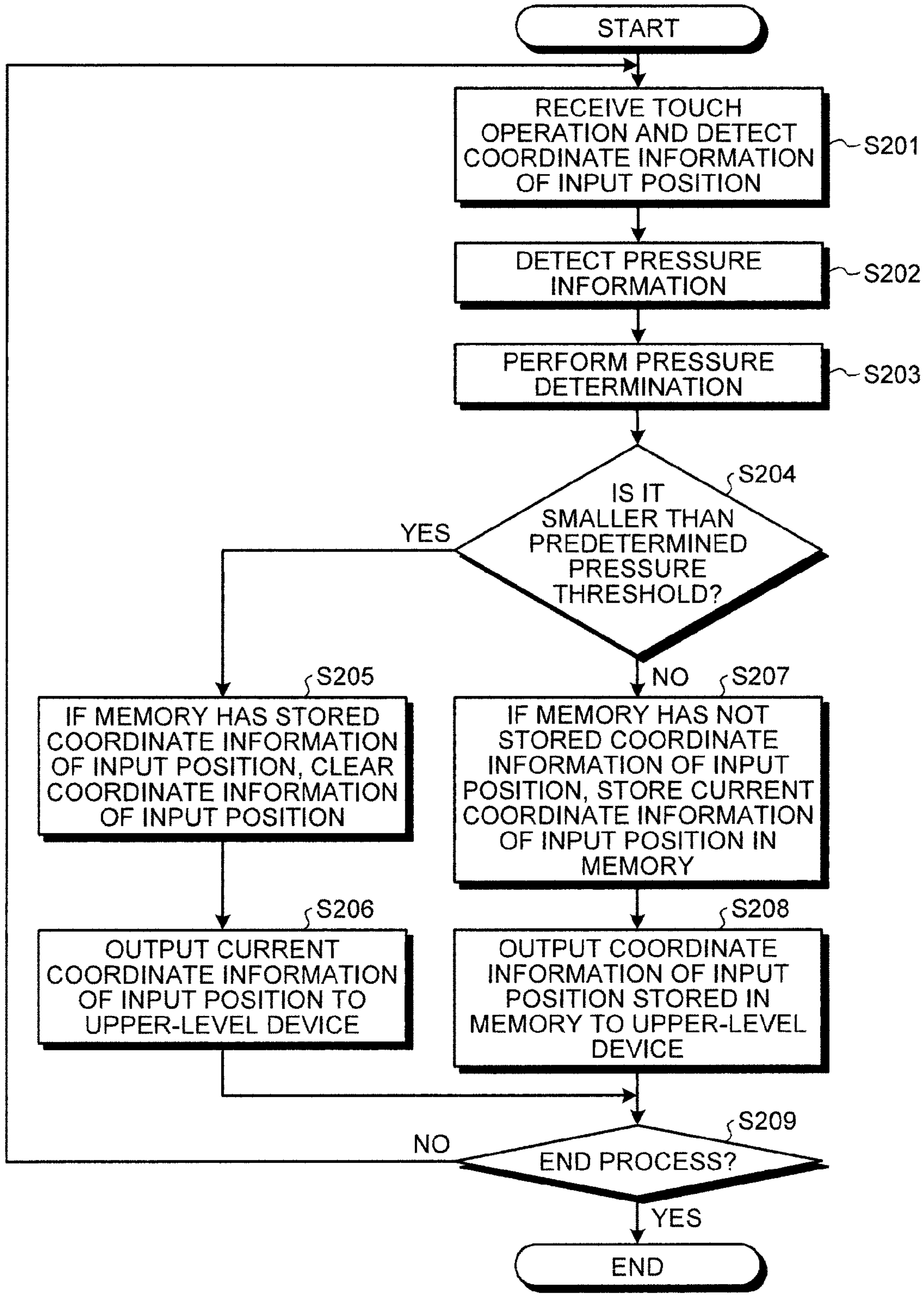
START
RECEIVE TOUCH OPERATION AND DETECT COORDINATE INFORMATION OF INPUT POSITION
S201
DETECT PRESSURE INFORMATION
S202
PERFORM PRESSURE DETERMINATION
S203
IS IT SMALLER THAN PREDETERMINED PRESSURE THRESHOLD?
S204
YES
NO
S205
IF MEMORY HAS STORED COORDINATE INFORMATION OF INPUT POSITION, CLEAR COORDINATE INFORMATION OF INPUT POSITION
S207
IF MEMORY HAS NOT STORED COORDINATE INFORMATION OF INPUT POSITION, STORE CURRENT COORDINATE INFORMATION OF INPUT POSITION IN MEMORY
S206
OUTPUT CURRENT COORDINATE INFORMATION OF INPUT POSITION TO UPPER-LEVEL DEVICE
S208
OUTPUT COORDINATE INFORMATION OF INPUT POSITION STORED IN MEMORY TO UPPER-LEVEL DEVICE
S209
END PROCESS?
NO
YES
END

FIG.7

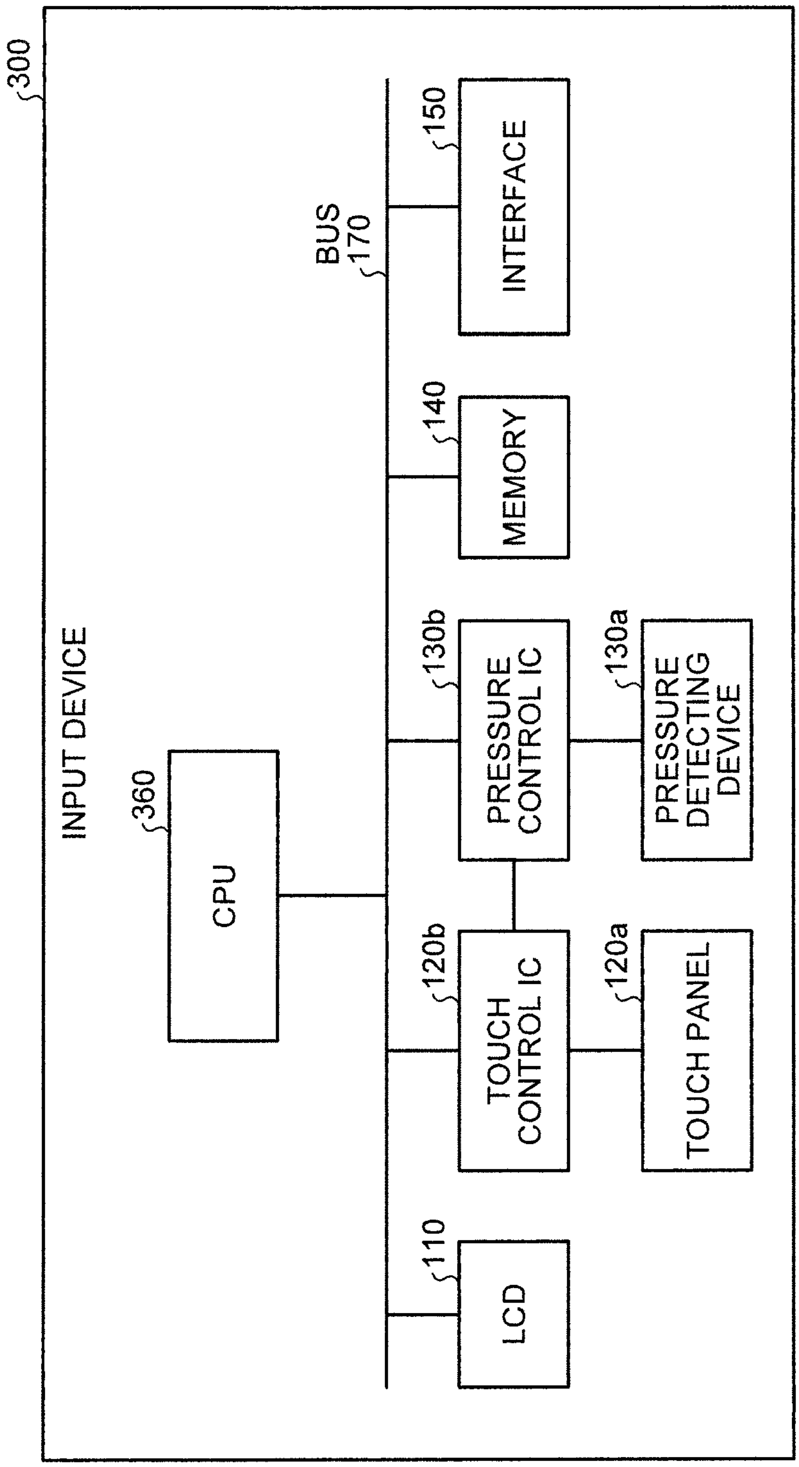
300
INPUT DEVICE
360
CPU
BUS
170
110
LCD
120b
TOUCH CONTROL IC
120a
TOUCH PANEL
130b
PRESSURE CONTROL IC
130a
PRESSURE DETECTING DEVICE
140
MEMORY
150
INTERFACE

FIG.8

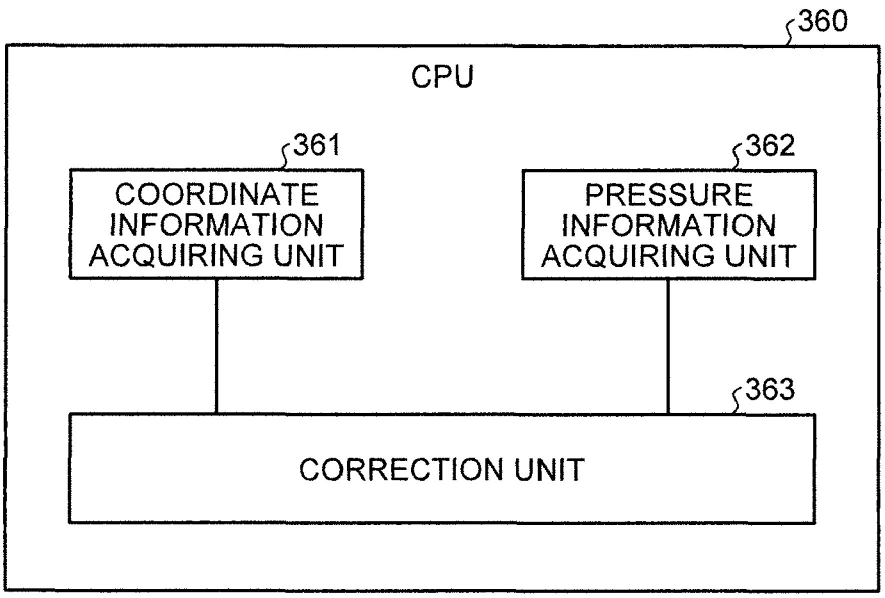
360
CPU
361
COORDINATE INFORMATION ACQUIRING UNIT
362
PRESSURE INFORMATION ACQUIRING UNIT
363
CORRECTION UNIT

FIG.9

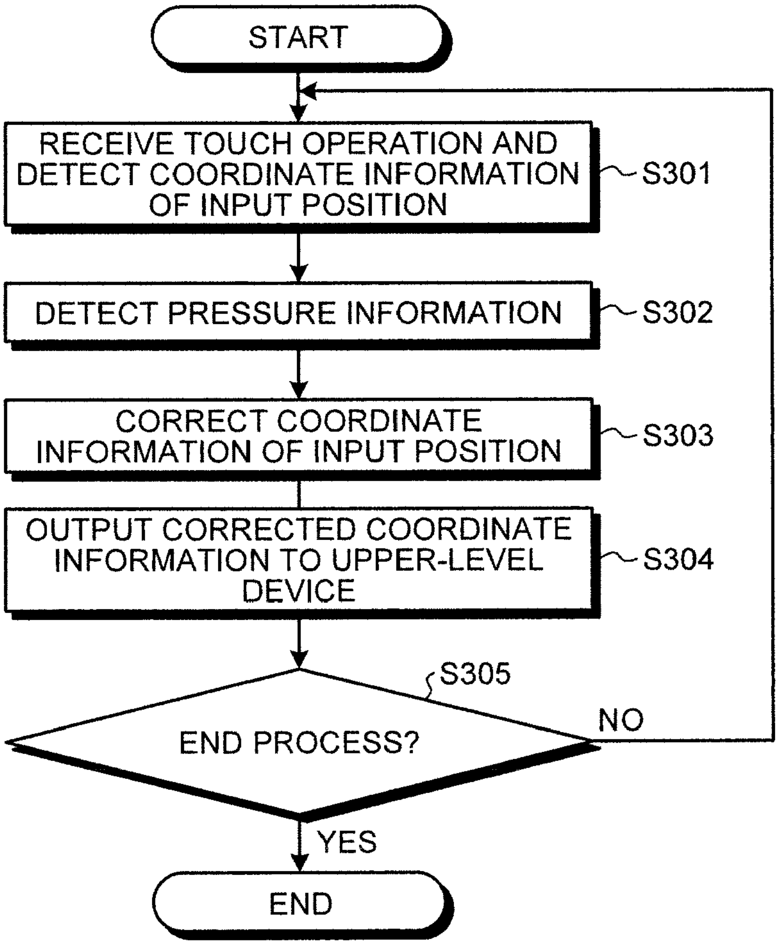
START
RECEIVE TOUCH OPERATION AND DETECT COORDINATE INFORMATION OF INPUT POSITION
S301
DETECT PRESSURE INFORMATION
S302
CORRECT COORDINATE INFORMATION OF INPUT POSITION
S303
OUTPUT CORRECTED COORDINATE INFORMATION TO UPPER-LEVEL DEVICE
S304
S305
END PROCESS?
NO
YES
END

FIG.10

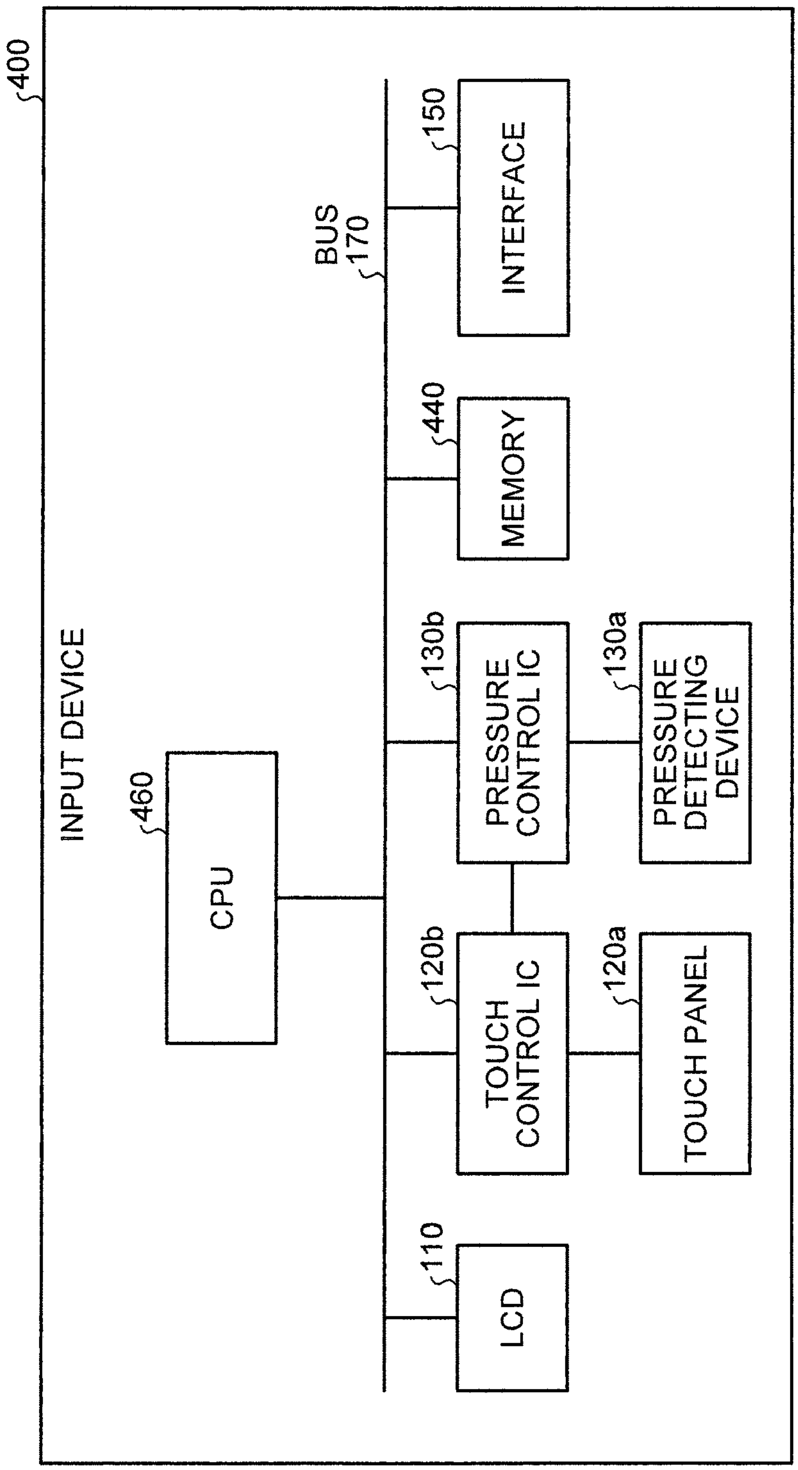
400
INPUT DEVICE
460
CPU
BUS
170
150
INTERFACE
440
MEMORY
130b
PRESSURE CONTROL IC
130a
PRESSURE DETECTING DEVICE
120b
TOUCH CONTROL IC
120a
TOUCH PANEL
110
LCD

FIG.11

| | 0 | 1 | 2 | ··· | Ymax-2 | Ymax-1 | Ymax |
|---|---|---|---|---|---|---|---|
| 0 | 0 | 0 | 0 | ··· | 0 | 0 | 0 |
| 1 | 0 | 0 | 0 | ··· | 0 | 0 | 0 |
| 2 | 0 | 0 | 0 | ··· | 0 | 0 | 0 |
| ⋮ | ⋮ | | | | | | |
| Ymax-2 | 0 | 0 | 0 | ··· | 0 | 0 | 0 |
| Ymax-1 | 0 | 0 | 0 | ··· | 0 | 0 | 0 |
| Ymax | 0 | 0 | 0 | ··· | 0 | 0 | 0 |

FIG.12

| | 0 | 1 | 2 | ··· | Ymax-2 | Ymax-1 | Ymax |
|---|---|---|---|---|---|---|---|
| 0 | -10 | -10 | -10 | ··· | -10 | -10 | -10 |
| 1 | -10 | -10 | -10 | ··· | -10 | -10 | -10 |
| 2 | -9 | -9 | -9 | ··· | -9 | -9 | -9 |
| ⋮ | ⋮ | | | | | | |
| Ymax-2 | -1 | -1 | -1 | ··· | -1 | -1 | -1 |
| Ymax-1 | 0 | 0 | 0 | ··· | 0 | 0 | 0 |
| Ymax | 0 | 0 | 0 | ··· | 0 | 0 | 0 |

FIG.13

| Pcur' | CORRECTION AMOUNT |
|---|---|
| 0 | 0 |
| 1 | 0 |
| 2 | 0.1 |
| 3 | 0.4 |
| 4 | 0.7 |
| 5 | 1.0 |

FIG.14

| Pcur' | CORRECTION AMOUNT |
|---|---|
| 0 | 0 |
| 1 | 0 |
| 2 | 0.1 |
| 3 | 0.4 |
| 4 | 0.7 |
| 5 | 1.0 |

FIG.15

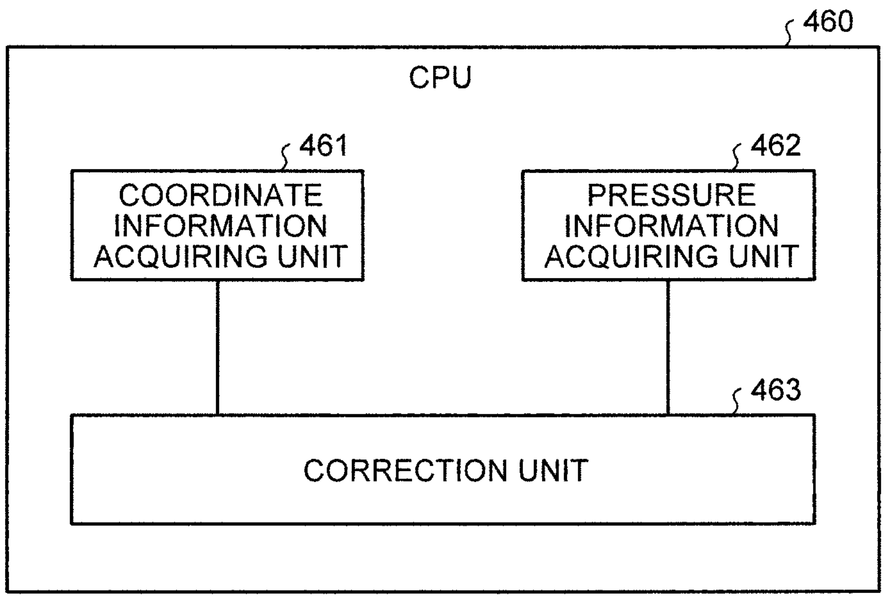
460
CPU
461
COORDINATE INFORMATION ACQUIRING UNIT
462
PRESSURE INFORMATION ACQUIRING UNIT
463
CORRECTION UNIT

FIG.16

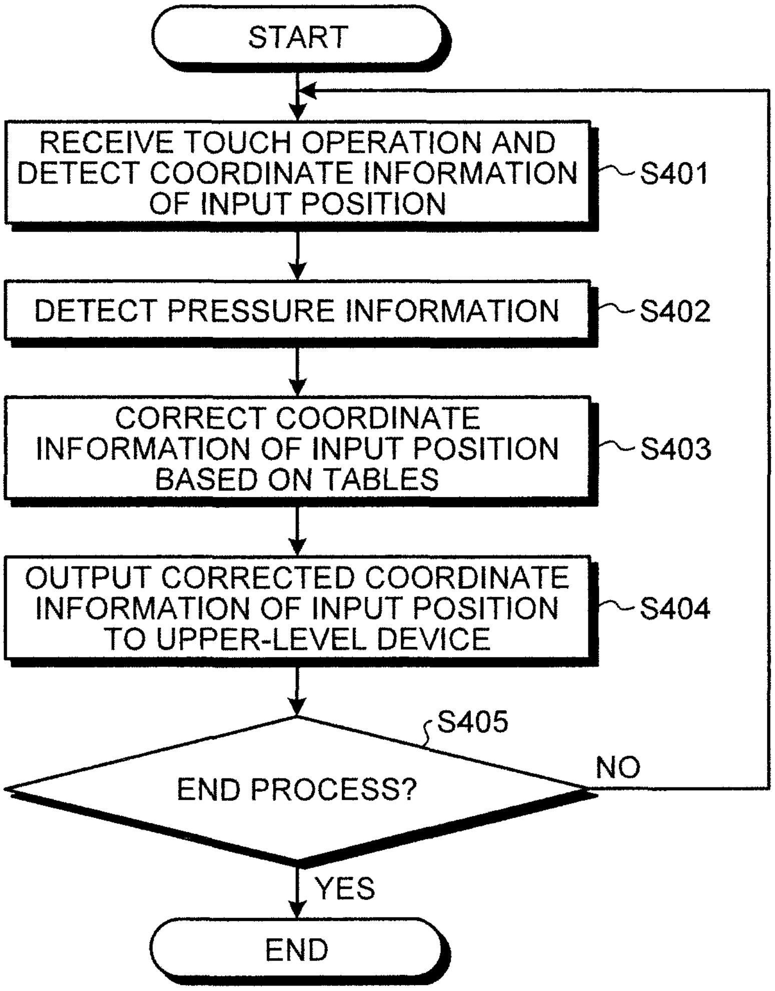
START
RECEIVE TOUCH OPERATION AND DETECT COORDINATE INFORMATION OF INPUT POSITION
S401
DETECT PRESSURE INFORMATION
S402
CORRECT COORDINATE INFORMATION OF INPUT POSITION BASED ON TABLES
S403
OUTPUT CORRECTED COORDINATE INFORMATION OF INPUT POSITION TO UPPER-LEVEL DEVICE
S404
S405
END PROCESS?
NO
YES
END

FIG.17

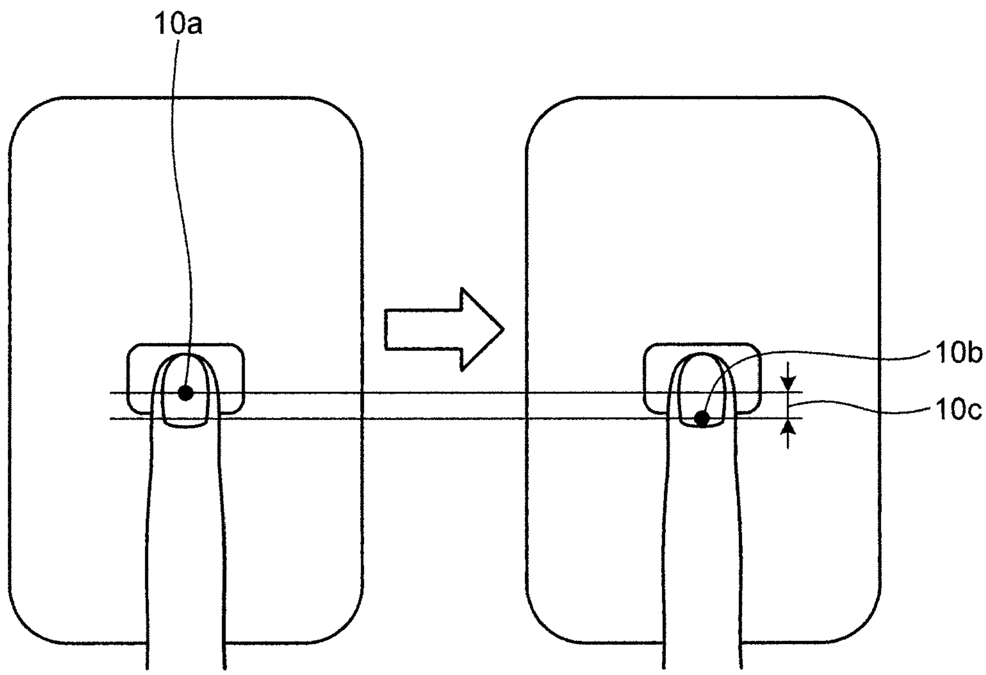

# FIG.18

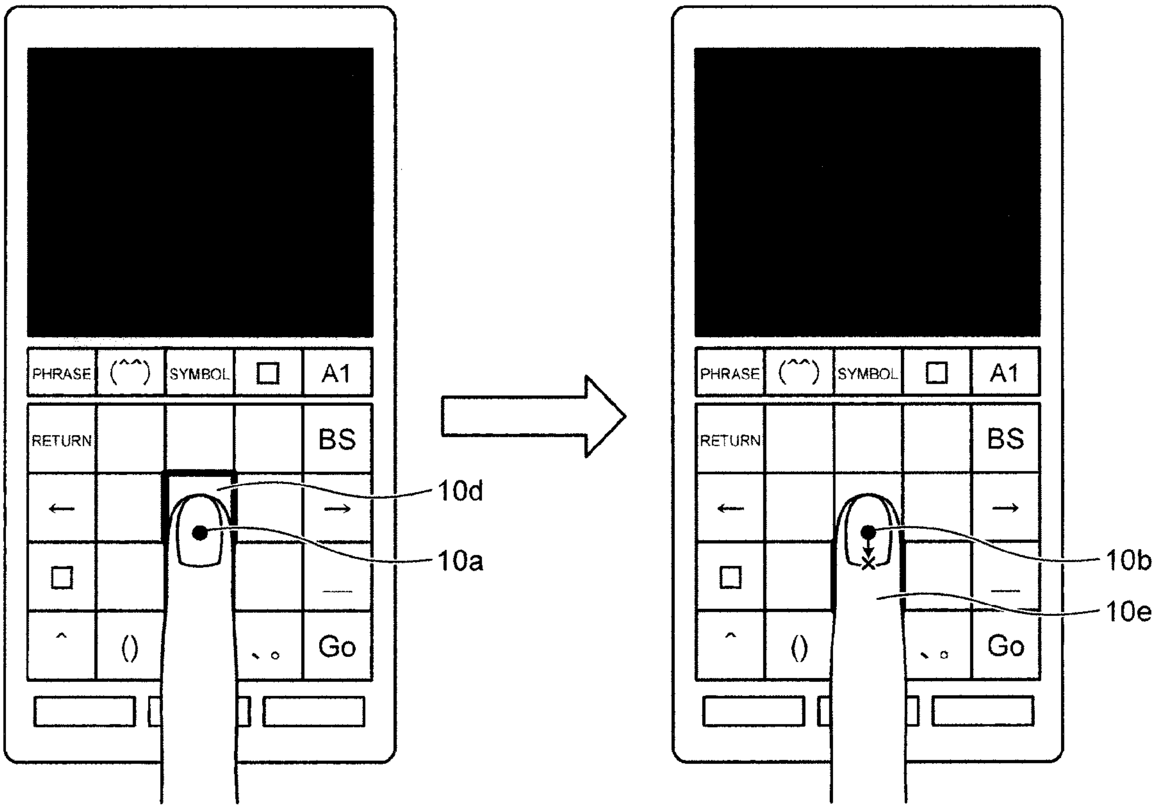

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004110388 A
- JP 2008276276 A